# FASCICULE DE BREVET EUROPEEN

(11) **EP 0 491 625 B1**
(45) Date de publication et mention de la délivrance du brevet: **01.02.1995**
(21) Numéro de dépôt: 91403435.0
(22) Date de dépôt: 18.12.1991
(51) Int. Cl.: F23R 3/00, F23R 3/54, F23R 3/04

(54) **Chambre de combustion à contre-courant de longueur courte, et à formation réduite de NOx**
Umkehrbrennkammer von kurzer Länge mit reduzierter NOx-Produktion
Short length, low NOx, reverse flow combustion chamber

(30) Priorité: 19.12.1990 FR 9015911
(43) Date de publication de la demande: 24.06.1992
(73) Titulaire: SOCIETE NATIONALE D'ETUDE ET DE CONSTRUCTION DE MOTEURS D'AVIATION, "S.N.E.C.M.A.", F-75724 Paris Cédex 15 (FR)
(72) Inventeur: Barbier, Gérard Yves Georges, F-91420 Morangis (FR); Bardey, Xavier Marie Henri, F-77590 Chartrettes (FR); Desaulty, Michel André Albert, F-77240 Vert Saint Denis (FR); Meunier, Serge Marcel, F-77820 Le Chatelet en Brie (FR)

(56) Documents cités:
- WO-A-90/07087
- GB-A- 2 010 407
- US-A- 3 372 541
- US-A- 4 040 251
- NTIS TECH NOTES april 1984,Springfield,US. "A multifuel,low emission gasturbine"

## Description

On connaît déjà, par exemple par US-A-4,040,252, une chambre de combustion, notamment pour turbomachine, comportant une première enceinte, dans laquelle débouche le dispositif d'injection de carburant ; une deuxième enceinte de combustion et d'évacuation des gaz partiellement brûlés dans la première enceinte, le sens de l'amont vers l'aval de la deuxième enceinte étant sensiblement opposé au sens de l'amont vers l'aval de la première enceinte, de sorte que lesdites enceintes sont disposées dans la configuration dite "à contre-courant" ; des orifices d' admission de comburant primaire, qui traversent une paroi délimitant la première enceinte ; des orifices d'admission de comburant secondaire servant à la dilution des gaz brûlés et à l'achèvement de la combustion ; et une enceinte de diffusion de comburant auxdits orifices d'admission de comburant primaire et de comburant de dilution, dont une première partie d'une paroi la délimitant entoure l'ensemble des première et deuxième enceintes.

Selon cet état connu de la technique, une partie au moins des orifices de dilution des gaz traversent la paroi délimitant la première enceinte ce qui contribue à appauvrir le mélange initial carburant/comburant et à ralentir la combustion. Il en résulte, entre autres, des émissions polluantes d'oxydes d'azote. Par ailleurs, on connaît par le US-A 3.372.541 une chambre de combustion du type ci-dessus dans laquelle les orifices d'admission de comburant primaire débouchent exclusivement dans la première enceinte tandis que les orifices d'admission de comburant secondaire débouchent eux mêmes exclusivement dans la deuxième enceinte. Toutefois, ce dispositif ne donne pas entièrement satisfaction, notamment en ne permettant pas le refroidissement de la paroi de la première enceinte.

L'invention a pour but de réduire ou même d'éviter ces émissions d'oxydes d'azote et à cet effet propose les dispositions réalisant un mélange initial riche, brûlant rapidement le carburant, diluant ces gaz brûlés seulement après la combustion confinée du mélange riche, et permettant un refroidissement efficace de la première enceinte.

La présente invention a donc pour objet une chambre de combustion, notamment pour turbomachine, comportant :
- une première enceinte, dans laquelle débouche le dispositif d'injection de carburant, ladite première enceinte étant délimitée par une paroi double comportant une paroi chaude et une paroi froide qui constituent respectivement les faces intérieure et extérieure de la première enceinte et qui sont distante l'une de l'autre ;
- une deuxième enceinte de combustion et d'évacuation des gaz partiellement brûlés dans la première enceinte, le sens de l'amont vers l'aval de la deuxième enceinte étant sensiblement opposé au sens de l'amont vers l'aval de la première enceinte, de sorte que lesdites enceintes sont disposées dans la configuration dite "à contre-courant" ;
- des orifices d'admission de comburant primaire, qui traversent la paroi délimitant la première enceinte et qui débouchent exclusivement dans celle-ci ;
- des orifices d'admission de comburant secondaire qui servent à la dilution des gaz brûlés et à l'achèvement de la combustion et qui débouchent exclusivement dans la deuxième enceinte ;
- une enceinte de diffusion de comburant auxdits orifices d'admission de comburant primaire et de comburant de dilution, dont une première partie d'une paroi la délimitant entoure l'ensemble des première et deuxième enceintes ; et
- un passage ménagé entre la paroi chaude et la paroi froide et communiquant exclusivement avec l'enceinte de diffusion de comburant et avec la deuxième enceinte de manière à faire circuler un fluide de refroidissement de la paroi chaude.

Les avantageuses dispositions suivantes sont, en outre, de préférence adoptées :
- une deuxième partie de la paroi délimitant l'enceinte de diffusion de comburant, qui entoure partiellement la première enceinte, délimite concomitamment une partie de la deuxième enceinte ;
- l'enceinte de diffusion de comburant comporte à l'amont deux parties séparées, une partie entourant exclusivement la deuxième enceinte et une partie, qui entoure la première enceinte et à l'intérieur de laquelle un dispositif de compression de comburant est disposé.

L'avantage principal de l'invention réside dans la constitution d'une première enceinte, dans laquelle la combustion est très rapide, le mélange étant riche, sans admission complémentaire de comburant (ni de dilution, ni de refroidissement de la paroi de cette première enceinte), la dilution succédant à cette combustion, étant elle-même rapide, évitant la formation des oxydes d'azote.

L'invention sera mieux comprise, et des caractéristiques secondaires et leurs avantages apparaîtront au cours de la description d'une réalisation donnée ci-dessous à titre d'exemple.

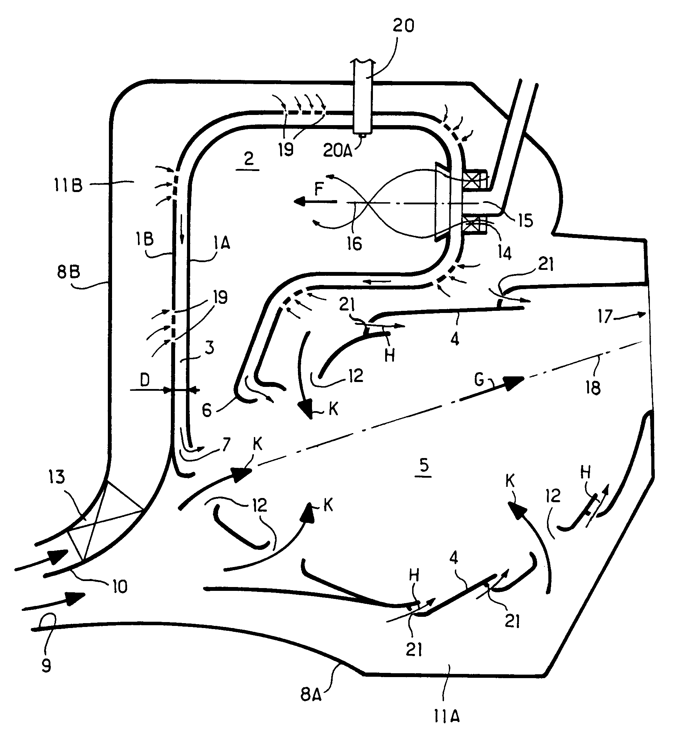

Il est entendu que la description et le dessin ne sont donnés qu'à titre indicatif et non limitatif.

Il sera fait référence au dessin annexé, dans lequel la figure unique est une coupe axiale d'une chambre de combustion conforme à l'invention.

La chambre de combustion représentée sur la figure comporte :
- une paroi double 1A-1B, constituée par une paroi chaude 1A, qui est la paroi intérieure délimitant une première enceinte 2, et, par une paroi froide 1B, disposée à une petite distance D de la paroi chaude, qui est la paroi extérieure de ladite enceinte, un passage 3 étant donc ménagé entre les parois chaude 1A et froide 1B ;
- une paroi 4, qui délimite une deuxième enceinte 5, raccordée à la première enceinte 2 par une sorte de col 6 (ou passage rétréci), le passage 3 débouchant dans ladite deuxième enceinte 5 par une ouverture 7 située à la base du col de raccordement 6 ;
- une paroi 8A ; 8B qui entoure l'ensemble des première (2) et deuxième (5) enceintes, et qui délimite, avec les parois 1B et 4 délimitant ces enceintes, une enceinte 11A-11B de diffusion de comburant comportant un col amont 9 d'admission de comburant ;
- une paroi de séparation 10 qui sépare le col amont 9 jusqu'à la jonction de la paroi 4 avec la paroi froide 1B.

La partie 8A de la paroi 8A-8B entoure (partiellement) la paroi 4 de la deuxième enceinte 5, délimite avec elle une première partie 11A de l'enceinte de diffusion de comburant, et débouche dans celle-ci par des orifices 12 d'admission de comburant de dilution des gaz brûlés chauds, qui traversent la paroi 4. Ces orifices 12 ne débouchent que dans la deuxième enceinte 5. La partie 8B de la paroi 8A-8B délimite avec la paroi froide 1B et avec une partie de la paroi 4, la deuxième partie 11B de l'enceinte de diffusion du comburant. Il doit être observé qu'un dispositif supplémentaire de compression 13 est, dans l'exemple représenté, disposé à l'intérieur de la partie 11B de l'enceinte pour augmenter la pression du comburant (généralement de l'air) entourant la première enceinte 2. En variante, il resterait conforme à l'invention de supprimer le dispositif 13.

Cette première enceinte 2 ne communique avec l'enceinte 11A-11B de diffusion du comburant que par l'intermédiaire des seuls orifices d'admission de comburant primaire 14 qui entourent le dispositif d'injection de carburant 15. Cette injection est réalisée sensiblement symétriquement par rapport à l'axe 16 de la première enceinte 2, le dispositif d'injection 15 étant placé en amont de la première enceinte 2, le gaz brulé s'échappant vers l'aval (flèche F) de la première enceinte 2, puis vers le col 6. Aucun orifice de dilution de gaz brulé ne débouche dans la première enceinte 2.

Du col 6, qui constitue l'amont de la deuxième enceinte 5, les gaz brûlés et le carburant en excès, remélangés avec le comburant ayant traversé les orifices de dilution 12 et provenant de l'espace 3 (et ayant traversé l'ouverture 7), s'échappent vers l'aval 17 de la deuxième enceinte, dans le sens général de la flèche G, suivant l'axe général 18 de la deuxième enceinte 5. On se rend donc compte que les flux de gaz s'écoulent sensiblement en sens opposés (F et G) dans les première et deuxième enceintes : celles-ci sont disposées dans la configuration dite "à contre-courant".

De petites perforations 19 traversent la paroi froide 1B et permettent à une partie du comburant contenu dans la partie 11B de l'enceinte de diffusion de pénétrer dans le passage 3 pour s'écouler vers l'ouverture 7, refroidissant entre-temps la paroi chaude 1A.

Une (ou plusieurs) bougie 20 a sa tête d'allumage 20A contenue dans la première enceinte 2 et permet l'inflammation du mélange carburant/comburant contenu dans cette première enceinte 2.

A noter également que la paroi 4 doit être, elle aussi refroidie, ce qui est réalisé dans l'exemple décrit par le comburant de refroidissement qui traverse de petites perforations 21 ménagées dans les parties de raccordement des diverses viroles constituant la paroi 4 (flèche H).

On sait, par expérience, et grâce à de nombreuses mesures déjà effectuées, que la production d'oxydes d'azote est maximale lorsque la richesse du mélange correspond à un mélange stoechiométrique, cette production polluante diminuent notablement de part et d'autre de cette valeur maximale (courbe en cloche). Si donc, on réalise la combustion proprement dite avec une richesse de mélange supérieure à celle correspondant à la stoechiométrie, et qu'ensuite on évacue les gaz brulés avec un mélange dont la richesse est au contraire inférieure aux conditions stoechiométriques, on diminue pendant ces deux phases l'émission d'oxydes d'azote. C'est précisément ce qui est réalisé dans la chambre de combustion décrite : dans la première enceinte, l'admission de comburant (14) est faible et le mélange riche, déclenchant une combustion stable, peu polluante en oxydes d'azote. Dès leur sortie de la première enceinte, les gaz brulés et le carburant en excès sont remélangés vigoureusement à du comburant de dilution (grandes flèches K) qui traverse les orifices 12, établit des conditions d'un mélange pauvre, peu polluant, et réalise une évacuation efficace des gaz dilués.

La disposition générale retenue contribue en outre à obtenir un encombrement longitudinal réduit : la deuxième enceinte 5, dans laquelle est réalisée la dilution, n'étant pas placée dans le prolongement, mais à côté de la première enceinte 2. De plus, la partie de la paroi 4 qui est disposée en regard de la paroi double délimitant la première enceinte 2, constitue en même temps une partie de la paroi délimitant la partie 11B de l'enceinte de diffusion du comburant, ce qui est propre à réduire l'encombrement transversal.

## Revendications

1. Chambre de combustion, notamment pour turbomachine comportant :
- une première enceinte (2), dans laquelle débouche le dispositif (15) d'injection de carburant, ladite première enceinte (2) étant délimitée par une paroi double (1A-1B) comportant une paroi chaude (1A) et une paroi froide (1B), qui constituent respectivement les faces intérieure et extérieure de la première enceinte et qui sont distantes l'une de l'autre (D) ;
- Une deuxième enceinte (5) de combustion et d'évacuation des gaz partiellement brûlés dans la première enceinte, le sens (G) de l'amont vers l'aval de la deuxième enceinte (5) étant sensiblement opposé au sens (F) de l'amont vers l'aval de la première enceinte (2), de sorte que lesdites enceintes sont disposées dans la configuration dite "à contre-courant" ;
- Des orifices (14) d'admission de comburant primaire, qui traversent la paroi (1A - 1B) délimitant la première enceinte (2) et qui débouchent exclusivement dans celle ci ;
- Des orifices (12) d'admission de comburant secondaire qui servent à la dilution des gaz brûlés et à l'achèvement de la combustion et qui débouchent exclusivement dans la deuxième enceinte (5) ;
- une enceinte (11A-11B) de diffusion de comburant aux dits orifices d'admission de comburant primaire et de comburant de dilution, dont une première partie (8A-8B) d'une paroi la délimitant entoure l'ensemble des première et deuxième enceintes ; et
- un passage (3) ménagé entre la paroi chaude (1A) et la paroi froide (1B) et communiquant exclusivement avec l'enceinte de diffusion (11B) de comburant et avec la deuxième enceinte (5) de manière à faire circuler un fluide de refroidissement de la paroi chaude (1A)

2. Chambre de combustion selon la revendication 1, caractérisée en ce qu'une deuxième partie (4) de la paroi délimitant l'enceinte (11B) de diffusion de comburant, qui entoure partiellement la première enceinte (2), délimite concomitamment une partie de la deuxième enceinte (5).

3. Chambre de combustion selon l'une quelconque des revendications 1 ou 2, caractérisé en ce que l'enceinte de diffusion de comburant comporte à l'amont deux parties séparées (11A-11B), une partie (11A) entourant exclusivement la deuxième enceinte (5) et une partie (11B), qui entoure la première enceinte (2) et à l'intérieur de laquelle un dispositif (13) de compression de comburant est disposé.

## Claims

1. Combustion chamber, especially for a turbomachine including:
- a first enclosure (2) into which the fuel injection device (15) emerges, the said first enclosure (2) being delimited by a double wall (1A-1B) including a hot wall (1A) and a cold wall (1B), which respectively constitute the inside and outside faces of the first enclosure and which are distant from one another (D);
- a second enclosure (5) for combustion and outlet of the gases which were partially burnt in the first enclosure, the direction (G) from upstream to downstream of the second enclosure (5) being substantially opposed to the direction (F) from upstream to downstream of the first enclosure (2), so that the said enclosures are arranged in the so-called "countercurrent" configuration;
- primary oxidizer intake orifices (14) which pass through the wall (1A-1B) delimiting the first enclosure (2) and which emerge exclusively into the latter;
- secondary oxidizer intake orifices (12) which serve to dilute the burnt gases and complete the combustion and which emerge exclusively into the second enclosure (5);
- an enclosure (11A-11B) for diffusion of oxidizer to the said primary oxidizer and dilution oxidizer intake orifices, of which enclosure a first part (8A-8B) of a wall delimiting it surrounds the whole of the first and second enclosures; and
- a passage (3) made between the hot wall (1A) and the cold wall (1B) and communicating exclusively with the oxidizer-diffusing chamber (11B) and with the second enclosure (5) so as to cause a fluid for cooling the hot wall (1A) to circulate.

2. Combustion chamber according to Claim 1, characterized in that a second part (4) of the wall delimiting the oxidizer-diffusing enclosure (11B), which partially surrounds the first enclosure (2), concomitantly delimits part of the second enclosure (5).

3. Combustion chamber according to either one of Claims 1 and 2, characterized in that the oxidizer-diffusing enclosure includes, upstream, two separate parts (11A-11B), part (11A) exclusively surrounding the second enclosure (5) and a part (11B) which surrounds the first enclosure (2) and inside which there is located an oxidizer-compressor device (13).

## Patentansprüche

1. Brennkammer, insbesondere für ein Strahltriebwerk aufweisend:
- einen ersten Raum (2), in den die Brennstoffeinspritzvorrichtung (15) mündet, wobei der erste Raum (2) durch eine Doppelwand (1A-1B) mit einer heißen Wand (1A) und einer kalten Wand (1B) abgegrenzt ist, die die Innen- bzw. Außenseite des ersten Raums bilden und voneinander um einen Abstand (D) beabstandet sind;
- einen zweiten Raum (5) zur Verbrennung und zum Auslaß von in dem ersten Raum teilweise verbrannten Gasen, wobei die Stromrichtung (G) des zweiten Raums (5) im wesentlichen der Stromrichtung (F) des ersten Raums (2) so entgegengesetzt ist, daß die Räume in einer Gegenstromanordnung vorgesehen sind;
- Öffnungen (14) zum Einlaß eines ersten Verbrennungsmittels (Sauerstoffträgers), die durch die Wand (1A-1B) hindurchgehen, die den ersten Raum (2) abgrenzt und die ausschließlich in diesen münden;
- Öffnungen (12) zum Einlaß eines zweiten Verbrennungsmittels, die zur Verdünnung der verbrannten Gase und zur Beendigung der Verbrennung dienen und die ausschließlich in den zweiten Raum (5) münden;
- ein Raum (11A-11B) zur Verbreitung von Verbrennungsmitteln zu den Öffnungen zum Einlaß des ersten Verbrennungsmittels und des Verdünnungsverbrennungsmittels, wobei ein erster Teil (8A-8B) einer ihn begrenzenden Wand die Anordnung bestehend aus dem ersten und dem zweiten Raum umgibt; und
- einen zwischen der heißen Wand (1A) und der kalten Wand (1B) vorgesehenen Durchlaß (3), der ausschließlich mit dem Verbreitungsraum (11B) des Verbrennungsmittels und mit dem zweiten Raum (5) so verbunden ist, daß ein Kühlfluid von der kalten Wand (1A) zirkuliert.

2. Brennkammer nach Anspruch 1,
dadurch **gekennzeichnet**,
daß ein zweiter Teil (4) der den Raum (11B) zur Verbreitung des Verbrennungsmittels begrenzenden Wand, die teilweise den ersten Raum (2) umgibt, miteinhergehend einen Teil des zweiten Raums (5) abgrenzt.

3. Brennkammer nach einem der Ansprüche 1 oder 2,
dadurch **gekennzeichnet**,
daß der Raum zur Verbreitung des Verbrennungsmittels stromaufwärts gelegen zwei getrennte Teile (11A-11B) aufweist, wovon ein Teil (11A) ausschließlich den zweiten Raum (5) umgibt und ein Teil (11B) den ersten Raum (2) umgibt, wobei in dessen Inneren eine Vorrichtung (13) zur Komprimierung des Verbrennungsmittels vorgesehen ist.
